# EUROPÄISCHE PATENTSCHRIFT

(11) **EP 0 444 732 B1**
(45) Veröffentlichungstag und Bekanntmachung des Hinweises auf die Patenterteilung: **13.10.1993**
(21) Anmeldenummer: 91200309.2
(22) Anmeldetag: 14.02.1991
(51) Int. Cl.: F23C 11/02, B01J 8/38, F22B 31/00

(54) **Wirbelschichtreaktor**
Fluidized bed reactor
Réacteur à combustible fluidisé

(30) Priorität: 20.02.1990 DE 4005305
(43) Veröffentlichungstag der Anmeldung: 04.09.1991
(73) Patentinhaber: METALLGESELLSCHAFT Aktiengesellschaft, 60015 Frankfurt (DE)
(72) Erfinder: Beisswenger, Hans, W-6232 Bad Soden 1 (DE); Reimert, Rainer, Dr., W-6270 Idstein (DE); Vydra, Karel, Dr., W-6350 Bad Nauheim (DE)

(56) Entgegenhaltungen:
- EP-A- 0 152 529
- WO-A-87/06678
- DE-A- 2 539 546
- DE-A- 3 519 159
- PATENT ABSTRACTS OF JAPAN, Band 11, Nr. 344 (M-640)[2791], 11. November 1987; & JP-A-62 123 212 (KAWASAKI) 04-06-1987

## Beschreibung

Die Erfindung betrifft einen Reaktor zum Verbrennen feinkörniger fester Brennstoffe in der zirkulierenden Wirbelschicht mit einer Wirbelbrennkammer, die im unteren Bereich mündende Zufuhrleitungen für Primärluft, Sekundärluft und festen Brennstoff aufweist, mit Feststoffabscheidungen innerhalb oder außerhalb der Wirbelbrennkammer, mit Durchlässen, die den oberen Bereich der Wirbelbrennkammer mit der Feststoffabscheidung verbinden, mit mindestens einer etwa senkrechten Wand im oberen Bereich der Wirbelbrennkammer, welche die Wirbelbrennkammer in mindestens zwei Teilkammern unterteilt, wobei zu jeder Teilkammer mindestens eine, mit der Teilkammer über einen Durchlaß verbundene Feststoffabscheidung gehört und wobei jede Feststoffabscheidung über eine Feststoff-Rückführung mit dem unteren Bereich der Wirbelbrennkammer verbunden ist.

Ein Reaktor dieser Art mit einem stationären Wirbelbett ist in JP-A-62 123 212 beschrieben. Die Verbrennung fester Brennstoffe in der zirkulierenden Wirbelschicht ist z.B. im deutschen Patent 25 39 546 und im dazu korrespondierenden US-Patent 4 165 717 beschrieben. Insbesondere bei Wirbelbrennkammern mit großen Querschnittflächen wird es schwierig, vor allem im oberen Bereich der Wirbelbrennkammer eine möglichst gleichmäßige Verteilung der Gase und Feststoffe zu erreichen. Für einen guten Ausbrand der feinkörnigen Brennstoffe, für eine wirksame Entschwefelung der Rauchgase und ganz allgemein für eine gute Energieausnutzung ist eine annähernd gleichmäßige Verteilung der Feststoffe und Gase aber wünschenswert. Der Wärmeübergang an einer gekühlten Wand hängt ja bekanntlich stark von der Konzentration der Feststoffe ab.

Der Erfindung liegt die Aufgabe zugrunde, beim eingangs genannten Reaktor für ein intensives Ausbrennen in den Teilkammern zu sorgen, unabhängig vom Durchmesser der Brennkammer. Erfindungsgemäß wird dies dadurch erreicht, daß die Wand mindestens eine Zufuhrleitung mit Verteileinrichtung zum Einleiten von Verbrennungsluft in die Teilkammern aufweist. Dadurch wird auch der Bereich der Teilkammern, der von der von außen kommenden Sekundärluft nur schwer erreicht wird, gut von Verbrennungsluft durchströmt.

Es ist vorteilhaft, die Wand mit Kühlflächen zu versehen, um zusätzlich Wärme abzuführen.

Vorzugsweise sorgt man durch die Anordnung der Wand dafür, daß die horizontalen Querschnittflächen der Teilkammern ungefähr gleich sind. Für die vom unteren Bereich der Wirbelbrennkammer aufsteigende Strömung ergibt sich dadurch im allgemeinen ohne zusätzlichen Aufwand eine ungefähr gleichmäßige Aufteilung auf die Teilkammern.

Für bestimmte Zwecke kann es vorteilhaft sein, daß zusätzlich zur Anordnung einer Wand (oder mehrerer Wände) die aus den Feststoffabscheidern austretenden Gasströme mit Hilfe von Regelorganen, z.B. Klappen oder Jalousien, so geregelt werden, daß sich innerhalb der durch die Trennwand gebildeten Teilkammern gleiche Strömungsverhältnisse ausbilden und somit eine weiter verbesserte Vergleichmäßigung der Gas- und Feststoffverteilung stattfindet.

Für die Wand, die sich vor allem im oberen Bereich der Wirbelbrennkammer befindet, sind verschiedene Konstruktionseinzelheiten zweckmäßig. Im oberen Bereich der Wirbelbrennkammer wird die Wand ganz oder weitgehend gasundurchlässig ausgebildet sein, um störende Querströmungen zwischen den Teilkammern möglichst zu vermeiden. Im unteren Bereich der Wirbelbrennkammer wird die Wand aber mindestens eine große Öffnung aufweisen, damit sich hier die Strömung auch mit horizontaler Komponente bewegen kann, um Ungleichmäßigkeiten frühzeitig auszugleichen. Von der Wand können auch Einspeiseleitungen für Brennstoff und/oder Chemikalien, z.B.
Calciumverbindungen, ausgehen. Durch diese Chemikalien werden in bekannter Weise störende Gasbestandteile gebunden.

Ausgestaltungsmöglichkeiten des Reaktors werden mit Hilfe der Zeichnung erläutert. In der Zeichnung werden nur die wichtigsten Einzelheiten schematisch dargestellt. Es zeigt:
- Fig. 1: einen Längsschnitt durch den Reaktor,
- Fig. 2: einen Querschnitt durch den Reaktor der Fig. 1 entlang der Linie II-II,
- Fig. 3: einen Längsschnitt entsprechend Fig. 1 durch eine aus Kühlrohren gebildete Wand,
- Fig. 4: einen Längsschnitt durch die Wirbelbrennkammer entlang der Linie IV-IV in Fig. 2,
- Fig. 5: einen Längsschnitt entsprechend Fig. 4 mit einer weiteren Variante der Wand,
- Fig. 6: einen Querschnitt durch eine Wirbelbrennkammer mit gekreuzten Wänden,
- Fig. 7: einen Querschnitt durch eine Wirbelbrennkammer mit zwei parallelen Wänden,
- Fig. 8: einen Längsschnitt entsprechend Fig. 1 durch eine Abwandlung des Reaktors und
- Fig. 9: einen Längsschnitt entsprechend Fig. 4 durch den Reaktor der Fig. 8.

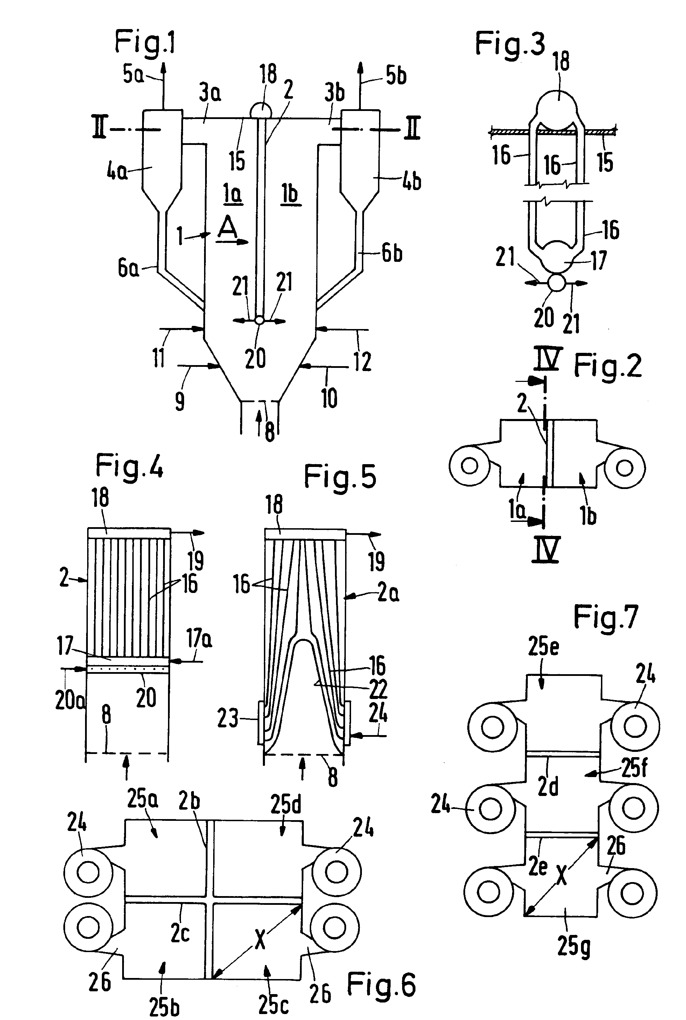

Der Reaktor der Fig. 1 weist die Wirbelbrennkammer (1) und die in ihrer Mitte senkrecht angeordnete Trennwand (2) auf. Durch die Trennwand entstehen zwei Teilkammern (1a) und (1b), vgl. auch Fig. 2. Vom oberen Ende einer jeden Teilkammer führt ein Kanal (3a) und (3b) zu einer Einrichtung für die Abtrennung von Feststoffen aus dem Gasstrom in Form eines Zyklons (4a) oder (4b). Gase verlassen die Zyklone (4a) oder (4b) durch die Leitungen (5a) oder (5b) und die abgeschiedenen Feststoffe gelangen durch die jeweilige Rückführleitung (6a) oder (6b) zurück in den unteren Bereich der Wirbelbrennkammer (1).

Am unteren Ende der Wirbelbrennkammer befindet sich ein Rost (8), durch den von unten Primärluft zum Aufwirbeln der körnigen Feststoffe und zu ihrer Verbrennung in die Kammer geblasen wird. Feinkörnige Brennstoffe, insbesondere Kohle, führt man durch die Leitungen (9) und (10) zu und Sekundärluft wird durch eine größere Anzahl von Leitungen, von denen in der Zeichnung nur die Leitungen (11) und (12) dargestellt sind, in die Wirbelbrennkammer (1) eingeblasen. Zwischen den Sekundärluftleitungen (11) und (12) und dem Rost (8) ist die Wirbelbrennkammer nach unten eingezogen ausgebildet. Die Wände der Wirbelbrennkammer können Kühlrohre aufweisen, die aber in der Zeichnung der besseren Übersichtlichkeit wegen nicht dargestellt sind.

Gemäß Fig. 1 und 2 reicht die Zwischenwand (2), ausgehend von der Decke (15) der Wirbelbrennkammer (1), hinunter bis etwa zur Höhe der Mündungen der Sekundärluftleitungen (11) und (12), die Lage des unteren Endes der Wand (2) kann aber variieren. Sobald sich in einer Teilkammer (1a) oder (1b) eine höhere Feststoffkonzentration als in der anderen Teilkammer ausbildet, steigt dadurch in dieser Teilkammer der Strömungswiderstand an und führt dazu, daß die vom unteren Bereich der Wirbelbrennkammer kommende Strömung den Weg des geringeren Widerstandes wählt und bevorzugt in die andere Teilkammer strömt. Dadurch gleichen sich Ungleichheiten in den Feststoffkonzentrationen so schnell aus, daß das Entstehen störender Konzentrationsunterschiede vermieden wird. Wichtig hierbei ist, daß die Teilkammern strömungstechnisch ziemlich ähnlich ausgebildet sind und in gleicher Weise einen Kanal (3a) oder (3b) mit zugehörigem Feststoffabscheider (4a) oder (4b) aufweisen. Vorzugsweise wählt man die Querschnittform der Wirbelbrennkammer und die Anordnung der Trennwand (2) so, daß Teilkammern mit etwa gleichen Querschnittflächen entstehen, vgl. Fig. 2. Es ist nicht zwingend erforderlich, daß die Wirbelbrennkammer im oberen Bereich eine rechteckige Form der Querschnittfläche aufweist, wie das für Fig. 1 und 2 gilt, denkbar ist auch eine mehr oder weniger elliptische Querschnittform, die durch eine Wand (2) unterteilt wird, was aber in der Zeichnung nicht dargestellt ist.

Die Wand (2) wird dazu benutzt, von außen Verbrennungsluft in die Teilkammern (1a) und (1b) einzuleiten. In der in Fig. 1 und 3 dargestellten Ausführungsform befindet sich am unteren Ende der Wand eine Luftleitung (20), durch die von außen in nicht dargestellter Weise durch ein Gebläse Luft eingeleitet wird. Die Leitung (20) ist mit Düsen versehen, durch welche die Luft an verschiedenen Stellen nach außen in die Teilkammern tritt, wie das durch die Pfeile (21) angedeutet ist. Die Wand (2) kann an den verschiedensten Stellen mit Zufuhrleitungen für Verbrennungsluft ausgerüstet sein, um Luft überall an den gewünschten Stellen in die Teilkammern (1a) und (1b) zu führen, was in der Zeichnung nicht dargestellt ist. Auf diese Weise kann ein sehr intensives Ausbrennen der Brennstoffe in den Teilkammern erreicht werden, unabhängig vom Durchmesser der Wirbelbrennkammer.

Eine der Leitung (20) vergleichbare Leitung (oder mehrere) kann dazu dienen, zusätzlichen Brennstoff und/oder Chemikalien, z.B. Calciumverbindungen, zum Binden störender Gasbestandteile in die Kammern einzuführen. Der besseren Übersichtlichkeit wegen wurden solche Leitungen in der Zeichnung aber auch weggelassen.

Die Wand (2) kann weitere Aufgaben erfüllen, um die Energieausnutzung zu verbessern. Eine Möglichkeit ist, die Wand aus etwa senkrechten Kühlrohren (16) aufzubauen, vgl. Fig. 3, die zwischen einem Speisewasserverteiler (17) und einem Dampfsammler (18) verlaufen. Vorzugsweise befindet sich der Dampfsammler (18) über der Decke (15) der Wirbelbrennkammer, vgl. auch Fig. 1. Benachbarte Kühlrohre sind so miteinander verbunden, daß eine geschlossene Wand entsteht, die im Beispiel der Fig. 3 doppelt ausgebildet ist.

Fig. 4 zeigt die Trennwand (2) in Frontansicht, d.h. in Richtung des Pfeils (A) in Fig. 1 gesehen. Schematisch dargestellt sind der Dampfsammler (18) mit Dampfableitung (19), die senkrechten Kühlrohre (16), die eine geschlossene Wand (2) bilden, der Speisewasserzulauf (17a) zur Verteilerleitung (17) und die Luftzufuhr (20a) zum Luftverteiler (20). Die Punktierung des Verteilers (20) deutet Luftaustrittsdüsen an. In Fig. 4 ist zu sehen, daß die Wand (2) nur teilweise in den unteren Bereich der Wirbelbrennkammer (1) reicht. Brennstoff- und Sekundärluftzufuhrleitungen wurden weggelassen.

Die Ausführungsform der Wand (2a) gemäß Fig. 5 reicht bis in den unteren, eingezogenen Bereich der Wirbelbrennkammer (1), wobei sie dort eine große torartige Öffnung (22) aufweist. Eine solche große Öffnung oder mehrere kleinere Öffnungen sind notwendig, damit sich die Strömung im unteren Bereich der Wirbelbrennkammer nicht nur mit vertikaler, sondern auch mit horizontaler Komponente bewegen kann. Dadurch vergleichmäßigt sich die Feststoffkonzentration in den Teilkammern im oberen Bereich der Wirbelbrennkammer. Die Wand (2a) der Fig. 5 weist einen ringförmigen Kühlwasserverteiler (23) auf, der mit Kühlwasser aus der Leitung (24) gespeist wird. Der in den Kühlrohren (16) gebildete Wasserdampf gelangt zum Sammler (18) und verläßt ihn in der Leitung (19) zur weiteren Verwendung. Die Zufuhrleitungen für Verbrennungsluft und evtl. auch für Brennstoff und/oder Chemikalien wurden in der Zeichnung weggelassen.

Für sehr große Wirbelbrennkammern mit extrem großer Querschnittfläche empfiehlt es sich, mehrere Trennwände vorzusehen und dadurch mehrere Teilkammern zu bilden. In Fig. 6 bilden die gekreuzten Trennwände (2b) und (2c) vier Teilkammern (25a), (25b), (25c) und (25d) aus, wobei zu jeder Teilkammer ein Zyklon (24) mit Verbindungskanal (26) gehört. Zu jedem Zyklon gehört eine Rückführleitung, durch welche abgeschiedene Feststoffe analog zu Fig. 1 in die Wirbelbrennkammer gelangen.

In der Ausführungsform der Fig. 7 ist die im Querschnitt rechteckige Wirbelbrennkammer durch zwei parallele Trennwände (2d) und (2e) in drei Teilkammern (25e), (25f) und (25g) geteilt. Hier ist ferner dargestellt, daß man jeder Teilkammer nicht nur eine Abscheidevorrichtung, sondern auch zwei (oder mehrere) zuordnen kann. Die beiden, zu jeder Teilkammer gehörenden Zyklone (24) sind hier einander gegenüberliegend angeordnet.

Jede Teilkammer besitzt eine größte horizontale Diagonalstrecke, die in Fig. 6 und 7 mit (X) bezeichnet ist. Wenn man Trennwände nur für Wirbelbrennkammern mit großem Querschnitt verwendet, wofür sie besonders geeignet sind, hat die jeweils größte horizontale Diagonalstrecke (X) der dabei gebildeten Teilkammern eine Länge von mindestens 3 m und vorzugsweise mindestens 5 m. Wirbelbrennkammern dieser Größe eignen sich für Kraftwerke, die mehr als 100 MW Strom erzeugen.

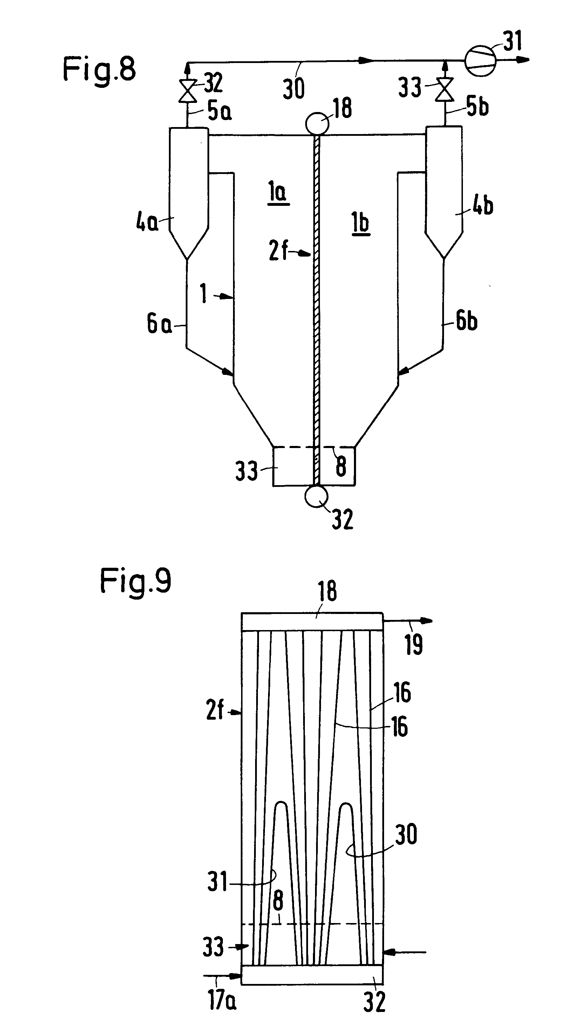

Die Wirbelbrennkammer der Fig. 8 und 9 ist durch eine senkrechte, mit Kühlrohren (16) versehene Wand (2f) geteilt, die teilweise bis unter den Rost (8) reicht. Im unteren Bereich der Wand sind zwei torartige Öffnungen (30) und (31) ausgebildet, an denen vorbei die Kühlrohre bis zu einem Speisewasserverteiler (32) laufen. Dieser Verteiler liegt unterhalb einer Kammer (33), von der aus die Primärluft durch den Rost (8) nach oben strömt. Auch bei dieser Ausführungsform befinden sich der Dampfsammler (18) und der Speisewasserverteiler (32) außerhalb der Wirbelbrennkammer. Brennstoffleitungen und Zufuhrleitungen für Verbrennungsluft wurden auch hier weggelassen. In Fig. 8 ist noch angedeutet, wie die Gase, die aus den Feststoffabscheidern (4a) und (4b) kommen und durch die Leitungen (5a) und (5b) strömen, über eine Sammelleitung (30) und ein Gebläse (31) abgeführt werden. Mittels regelbarer Ventile (32) und (33) kann zusätzlich dafür gesorgt werden, daß in den Teilkammern (1a) und (1b) möglichst gleiche Strömungsbedingungen herrschen.

## Patentansprüche

1. Reaktor zum Verbrennen feinkörniger fester Brennstoffe in der zirkulierenden Wirbelschicht mit einer Wirbelbrennkammer (1), die im unteren Bereich mündende Zufuhrleitungen für Primärluft, Sekundärluft (11, 12) und festen Brennstoff (9, 10) aufweist, mit Feststoffabscheidungen (4a, 4b, 24) innerhalb oder außerhalb der Wirbelbrennkammer, mit Durchlässen (3a, 3b, 26), die den oberen Bereich der Wirbelbrennkammer mit der Feststoffabscheidung verbinden, mit mindestens einer etwa senkrechten Wand (2, 2a - 2f) im oberen Bereich der Wirbelbrennkammer, welche die Wirbelbrennkammer in mindestens zwei Teilkammern (1a, 1b, 25a - 25g) unterteilt, wobei zu jeder Teilkammer mindestens eine, mit der Teilkammer über einen Durchlaß verbundene Feststoffabscheidung gehört und wobei jede Feststoffabscheidung über eine Feststoff-Rückführung (6a, 6b) mit dem unteren Bereich der Wirbelbrennkammer verbunden ist, dadurch gekennzeichnet, daß die Wand mindestens eine Zufuhrleitung (20a) mit Verteileinrichtung (20) zum Einleiten von Verbrennungsluft in die Teilkammern aufweist.

2. Reaktor nach Anspruch 1, dadurch gekennzeichnet, daß die horizontalen Querschnittflächen der Teilkammern ungefähr gleich sind.

3. Reaktor nach Anspruch 1 oder 2, dadurch gekennzeichnet, daß die Wand im oberen Bereich der Wirbelbrennkammer weitgehend gasundurchlässig ausgebildet ist.

4. Reaktor nach Anspruch 1 oder einem der folgenden, dadurch gekennzeichnet, daß die Wand im unteren Bereich mindestens eine große Öffnung (22, 30, 31) aufweist.

5. Reaktor nach Anspruch 1 oder einem der folgenden, dadurch gekennzeichnet, daß die Wand Kühlrohre (16) aufweist.

6. Reaktor nach Anspruch 1 oder einem der folgenden, dadurch gekennzeichnet, daß die Wand mindestens eine Leitung zum Einspeisen von Brennstoff aufweist.

7. Reaktor nach Anspruch 1 oder einem der folgenden, dadurch gekennzeichnet, daß die Wand mindestens eine Leitung zum Einspeisen von Chemikalien aufweist.

8. Reaktor nach Anspruch 1 oder einem der folgenden, dadurch gekennzeichnet, daß die größte horizontale Diagonalstrecke (X) in jeder Teilkammer mindestens 3 m lang ist.

9. Reaktor nach Anspruch 1 oder einem der folgenden, dadurch gekennzeichnet, daß die Wirbelbrennkammer durch zwei sich kreuzende Wände (2b, 2c) in vier Teilkammern (25a - 25d) geteilt ist.

10. Reaktor nach einem der Ansprüche 1 bis 8, dadurch gekennzeichnet, daß die Wirbelbrennkammer durch zwei parallele Wände (2d, 2e) in drei Teilkammern (25e - 25g) geteilt ist.

11. Reaktor nach Anspruch 1 oder einem der folgenden, dadurch gekennzeichnet, daß der untere Bereich der Wirbelbrennkammer sich nach unten verengend ausgebildet ist.

## Claims

1. A reactor for the combustion of fine-grained solid fuels in the circulating fluidised bed with a fluidised combustion chamber (1) which has feed lines for primary air, secondary air (11, 12) and solid fuel (9, 10) which open into the lower region, with solids separation means (4a, 4b, 24) inside or outside the fluidised combustion chamber, with passages (3a, 3b, 26) which connect the upper region of the fluidised combustion chamber to the solids separation means, with at least one approximately vertical wall (2, 2a - 2f) in the upper region of the fluidised combustion chamber which divides the fluidised combustion chamber into at least two partial chambers (1a, 1b, 25a - 25g), with at least one solids separation means which is connected to the partial chamber via a passage being associated with each partial chamber and with each solids separation means being connected via a solids return means (6a, 6b) to the lower region of the fluidised combustion chamber, characterised in that the wall has at least one feed line (20a) with distributing means (20) for introducing combustion air into the partial chambers.

2. A reactor according to Claim 1, characterised in that the horizontal cross-sectional surfaces of the partial chambers are approximately equal.

3. A reactor according to Claim 1 or 2, characterised in that the wall is designed to be largely impermeable to gas in the upper region of the fluidised combustion chamber.

4. A reactor according to Claim 1 or one of the following Claims, characterised in that the wall has at least one large opening (22, 30, 31) in the lower region.

5. A reactor according to Claim 1 or one of the following Claims, characterised in that the wall has cooling tubes (16).

6. A reactor according to Claim 1 or one of the following Claims, characterised in that the wall has at least one line for feeding in fuel.

7. A reactor according to Claim 1 or one of the following Claims, characterised in that the wall has at least one line for feeding in chemicals.

8. A reactor according to Claim 1 or one of the following Claims, characterised in that the maximum horizontal diagonal distance (X) in each partial chamber is at least 3 m long.

9. A reactor according to Claim 1 or one of the following Claims, characterised in that the fluidised combustion chamber is divided into four partial chambers (25a - 25d) by two intersecting walls (2b, 2c).

10. A reactor according to one of Claims 1 to 8, characterised in that the fluidised combustion chamber is divided into three partial chambers (25e - 25g) by two parallel walls (2d, 2e).

11. A reactor according to Claim 1 or one of the following Claims, characterised in that the lower region of the fluidised combustion chamber is designed to narrow downwards.

## Revendications

1. Réacteur destiné à faire brûler du combustible solide en grains fins en lit fluidisé circulant, comprenant une chambre de combustion (1) à lit fluidisé, qui comporte des entrées d'air primaire, d'air secondaire (11, 12) et de combustible (9, 10) solide dans la partie inférieure, des séparateurs (4a, 4b, 24) de matières solides, à l'intérieur ou à l'extérieur de la chambre à lit fluidisé, des passages (3, 3b, 36) qui mettent la partie supérieure de la chambre de combustion à lit fluidisé en communication avec le séparateur de matières solides, au moins une paroi (2, 2a à 2f) sensiblement verticale à la partie supérieure de la chambre de combustion à lit fluidisé, qui subdivise la chambre de combustion à lit fluidisé en au moins deux sous-chambres (1a, 1b, 25a à 25c), au moins un séparateur de matières solides faisant partie de chaque sous-chambre et communiquant avec elle par un passage, et chaque séparateur de matières solides communiquant avec la partie inférieure de la chambre de combustion à lit fluidisé par un recyclage (6a, 6b) de matières solides, caractérisé en ce que la paroi comporte au moins un conduit (20a) d'entrée ayant un répartiteur (20) d'envoi de l'air de combustion dans les sous-chambres.

2. Réacteur suivant la revendication 1, caractérisé en ce que les surfaces horizontales en section transversale des sous-chambres sont sensiblement identiques.

3. Réacteur suivant la revendication 1 ou 2, caractérisé en ce que la paroi dans la partie supérieure de la chambre de combustion à lit fluidisé, est sensiblement imperméable aux gaz.

4. Réacteur suivant la revendication 1 ou l'une des suivantes, caractérisé en ce que la paroi dans la partie inférieure comporte au moins une grande ouverture (22,30,31).

5. Réacteur suivant la revendication 1 ou l'une des suivantes, caractérisé en ce que la paroi comporte des tubes de refroidissement (16).

6. Réacteur suivant la revendication 1 ou l'une des suivantes, caractérisé en ce que la paroi comporte au moins un conduit d'alimentation en combustible.

7. Réacteur suivant la revendication 1 ou l'une des suivantes, caractérisé en ce que la paroi comporte au moins un conduit d'alimentation en produits chimiques.

8. Réacteur suivant la revendication 1 ou l'une des suivantes, caractérisé en ce que la plus grande étendue diagonale (X) horizontale de chaque sous-chambre a une longueur d'au moins 3 m.

9. Réacteur suivant la revendication 1 ou l'une des suivantes, caractérisé en ce que la chambre de combustion à lit fluidisé est subdivisée par deux parois (2b, 2c) croisées en quatre sous-chambres (25a à 25d).

10. Réacteur suivant l'une des revendications 1 à 8, caractérisé en ce que le lit fluidisé est subdivisé par deux parois (2d, 2e) parallèles en trois sous-chambres (25a à 25d).

11. Réacteur suivant la revendication 1 ou l'une des suivantes, caractérisé en ce que la partie inférieure de la chambre de combustion à lit fluidisé se rétrécit vers le bas.
